# FASCICULE DE BREVET EUROPEEN

(11) **EP 0 375 515 B1**
(45) Date de publication et mention de la délivrance du brevet: **10.11.1993**
(21) Numéro de dépôt: 89403478.4
(22) Date de dépôt: 14.12.1989
(51) Int. Cl.: F16L 19/02

(54) **Dispositif de liaison démontable entre deux pièces soumises à de fortes sollicitations**
Demontierbare Verbindung zwischen zwei stark beanspruchten Teilen
Dismountable coupling device between two parts subject to high stress

(30) Priorité: 14.12.1988 FR 8816472
(43) Date de publication de la demande: 27.06.1990
(73) Titulaire: SOCIETE EUROPEENNE DE PROPULSION (S.E.P.) S.A., 92150 Suresnes (FR)
(72) Inventeur: Blanpain, Guy, F-55700 Mouzay (FR); De Braeckelaer, Gilles, F-75006 Paris (FR); Bonniec, Jean-François, F-77350 Le Mee/Seine (FR)
(74) Mandataire: Thévenet, Jean-Bruno

(56) Documents cités:
- FR-A- 2 234 507
- FR-A- 2 577 632
- US-A- 3 929 358

## Description

La présente invention concerne un dispositif de liaison démontable entre une première et une seconde pièces, dont l'une au moins est soumise à de fortes sollicitations notamment d'origines thermique et vibratoire, comprenant un joint d'étanchéité comprimé entre les deux pièces, une bride principale formée sur la première pièce à assembler, et au moins une pièce de liaison destinée à exercer une action de retenue de ladite bride principale par rapport à la seconde pièce à assembler et à comprimer le joint d'étanchéité.

La réalisation d'un raccord entre éléments par exemple tubulaires dépend de la nature des matériaux à raccorder, de la matière véhiculée par ces éléments, des dimensions des éléments, ou encore des sollicitations exercées sur le raccord et/ou sur les éléments à raccorder, des fonctionnalités à accomplir. Il existe donc un grand nombre de raccords connus, qui répondent à un ou plusieurs problèmes techniques bien définis.

La présente invention concerne un dispositif de liaison, ou raccord, entre deux pièces, dont l'une au moins est soumise à de fortes sollicitations, d'origines thermique et vibratoire essentiellement, et ne doit pas être soumise à des contraintes mécaniques supplémentaires du fait de la liaison.

Il est connu, par exemple par le document FR-A-2 481 761, de réaliser une barrière thermique entre une pompe centrifuge à haute température et à forte pression, et son moteur.

La barrière thermique divulguée dans ce document est constituée de deux joues enserrant une garniture calorifuge; l'ensemble étant maintenu en place par des tirants parallèles à l'axe du moteur.

Ce genre de dispositif a une fonction de barrière thermique, mais ne constitue pas un raccord universel permettant de relier une première pièce à une seconde pièce sans qu'il soit nécessaire de réaliser un perçage des pièces.

Le document FR-A-2 234 507 divulgue par ailleurs un raccord vissé dans lequel un joint d'étanchéité est comprimé entre deux brides à l'aide d'un dispositif de serrage comprenant un anneau et des colliers à section en L.

Selon un mode particulier de réalisation, la surface externe de l'une des brides se trouvant à peu près parallèle à la surface d'étanchéité est en contact avec des colliers à section en L qui sont maintenues dans le sens radial par un premier anneau intermédiaire fermé. La surface externe correspondante de l'autre bride est en contact avec un second anneau intermédiaire fermé. La paire d'anneaux intermédiaires fermés est assemblée à l'aide d'un anneau de serrage comprenant des parties filetées à pas opposés qui se vissent sur les anneaux intermédiaires fermés.

Un tel raccord est adapté à des tubes émaillés intérieurement, de petites dimensions et soumis à de faibles sollicitations; mais ne permet pas de conférer à la liaison les qualités d'une barrière thermique ni de limiter les contraintes mécaniques susceptibles d'apparaître dans chacun des éléments du raccord par suite de dilatations différentielles ou de vibrations.

La présente invention a pour but de pallier les inconvénients présentés ci-dessus, et vise à réaliser un dispositif de liaison démontable pouvant être facilement mis en place et garantissant une liaison sûre et étanche entre deux pièces, dont l'une au moins est soumise à de fortes sollicitations, notamment thermiques, en limitant les contraintes exercées sur les deux pièces.

Ces buts sont atteints grâce à un dispositif de liaison démontable du type mentionné en tête de la description,
comprenant en outre une bague intermédiaire elle-même munie d'une bride et composée d'au moins deux tronçons, interposée entre ladite bride principale et ladite pièce de liaison et réalisée en matériau à faible conductibilité thermique; en ce que la pièce de liaison possède une paroi fine qui comporte des fentes dont le nombre et l'orientation permettent de définir de façon ajustée la valeur de l'élasticité conférée à la liaison par la paroi fine et la qualité de la barrière thermique définie entre lesdites première et seconde pièces, ladite paroi fine étant située entre une première partie de fixation sur ladite seconde pièce et une seconde partie cylindrique présentant un diamètre interne supérieur au diamètre extérieur de la bride principale, et en ce que la bride de ladite bague intermédiaire prend appui sur ladite seconde partie cylindrique de ladite pièce de liaison.

Selon un mode particulier de réalisation de l'invention, la première partie de la pièce intermédiaire de liaison reliée à la seconde pièce à assembler est constituée par un écrou coopérant avec un filetage de la seconde pièce.

Selon un autre mode de réalisation de l'invention, la pièce de liaison comprend une bride présentant une extrémité raccordée par boulonnage sur la seconde pièce à assembler et munie d'une partie mince annulaire dans laquelle sont formées plusieurs fentes radiales, et une douille profilée à paroi fine présentant un diamètre interne supérieur au diamètre extérieur de la bride principale et comportant des zones d'appui sur l'extrémité interne de de ladite partie mince annulaire et ladite bride de ladite bague intermédiaire.

Selon encore un autre mode de réalisation de l'invention, la pièce de liaison est monobloc, et formée d'une première bride fixée par boulonnage sur la seconde pièce à assembler, et d'une paroi fine présentant un diamètre intérieur supérieur au diamètre extérieur de la bride principale et munie de fentes orientées transversalement par rapport à l'axe XX′ de la liaison.

Au niveau de la surface de contact entre la bague et la première pièce à assembler, celle-ci est de préférence inclinée par rapport à l'axe de la liaison. Cependant il peut aussi être envisagé d'avoir un contact sur deux faces différentes: l'une cylindrique assurant le centrage des éléments de liaison et l'autre annulaire et perpendiculaire à la première, et située dans un plan transversal à la liaison pour assurer la transmission des efforts entre les pièces à assembler.

La paroi fine de la pièce de liaison peut présenter différentes formes et être bombée vers l'extérieur de la liaison cylindrique, ou encore en forme de soufflet.

Selon une application importante de l'invention, le dispositif de liaison est appliqué au montage sans perçage ni soudage d'une chambre de combustion en matériau composite sur son support. Dans cette application, les fonctions de barrière thermique et d'élasticité propres à l'invention sont particulièrement intéressantes. En effet, le découplage thermique ainsi réalisé limite les flux de chaleur entre les parties chaudes (chambre) et les parties froides du moteur (injecteur, vanne...). De plus, l'élasticité intrinsèque de la liaison selon l'invention lui permet de garder, lors de dilatations thermiques des matériaux en présence, les mêmes performances de liaison et d'étanchéité.

L'invention sera mieux comprise à l'aide de la description qui va suivre, faite en référence aux dessins annexés, sur lesquels :
- la figure 1 est une vue en élévation et en demi-coupe longitudinale d'un premier mode de réalisation du dispositif selon l'invention appliqué à une liaison entre une chambre de combustion et son support,
- la figure 2 est une demi-coupe longitudinale d'un dispositif de liaison selon un second mode de réalisation conforme à l'invention,
- la figure 3 est une vue partielle de dessous montrant une partie de la pièce de liaison de la figure 2,
- la figure 4 représente, en élévation et en demi-coupe longitudinale, un dispositif de liaison selon un troisième mode de réalisation de l'invention,
- la figure 5 montre, en demi-coupe longidutinale, un dispositif de liaison selon un quatrième mode de réalisation de l'invention,
- la figure 6 représente un cinquième mode de réalisation du dispositif de liaison selon l'invention, en demi-coupe longitudinale, et,
- la figure 7 représente en demi-coupe longitudinale, un dispositif de liaison analogue au premier mode de réalisation de la figure 1, mais dans lequel la bague intermédiaire présente deux surfaces de contact avec la chambre de combustion.

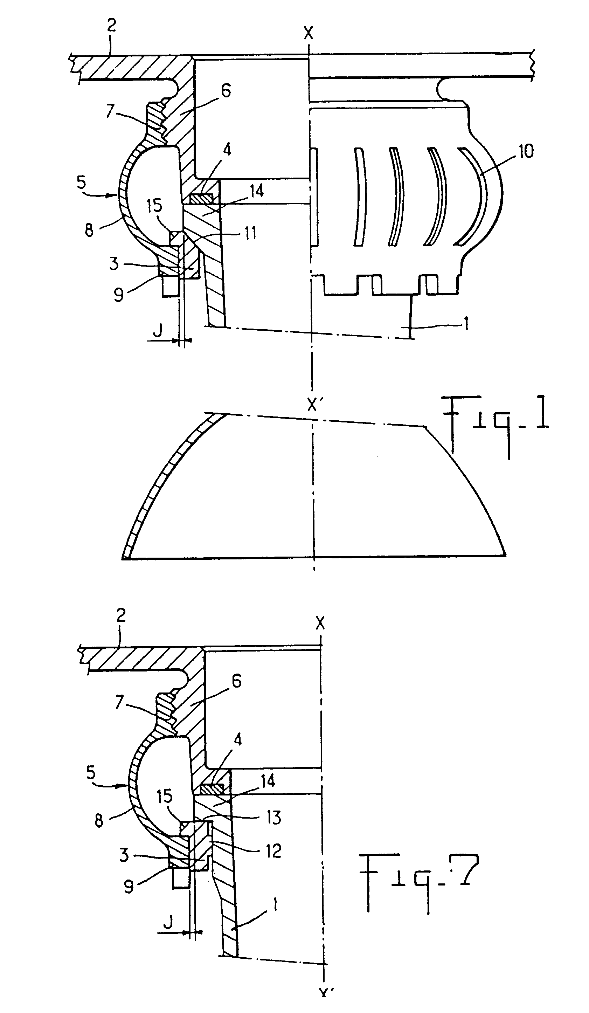

Selon un premier mode de réalisation tel que représenté sur la figure 1, le dispositif de liaison selon l'invention, réalise une liaison entre une première pièce 1 par exemple une chambre de combustion en matériaux composites, et une seconde pièce 2 telle qu'un support pour la chambre de combustion 1. Le dispositif de liaison comprend une bague intermédiaire 3, un joint d'étanchéité 4 et une pièce de liaison comprenant une première partie 7 en forme d'écrou rattachée à une paroi mince 8 se terminant par une seconde partie 9 venant porter contre une bride 15 de la bague intermédiaire 3.

La première pièce à assembler 1 peut présenter à une certaine distance de la liaison un profil quelconque, bombé par exemple dans le cas d'une chambre de combustion. Au niveau de la liaison, on comprendra aisément que les deux pièces à assembler 1, 2 présentent des surfaces de contact directement superposables. La seconde pièce à assembler 2 qui, dans l'exemple considéré, constitue le support de la chambre 1 est munie d'une rainure circonférentielle utilisée pour loger le joint d'étanchéité 4. Cette pièce 2 est en outre pourvue d'un filetage extérieur 6 coopérant avec la partie terminale 7 en forme d'écrou de la pièce de liaison 5. La partie filetée 7 de la pièce 5 sert de limite pour une paroi 8, d'épaisseur réduite, qui peut être bombée vers l'extérieur par exemple, et est avantageusement pourvue de fentes longitudinales 10 contribuant à conférer une élasticité et à réduire les transferts de chaleur. L'embase ou bride 9 de la pièce 5 sert d'appui pour la bague 3. Le diamètre intérieur de cette embase 9 est légèrement supérieur au diamètre extérieur de la bride 14 de retenue de la bague intermédiaire 3, formée à l'extrémité libre de la pièce 1. Un jeu j est ainsi prévu pour pouvoir enfiler l'embase 9 de la pièce 5 autour de la première pièce 1 lors du montage. Dans le cas où la pièce 1 est constituée par une chambre de combustion de moteur-fusée, il est particulièrement avantageux de pouvoir insérer le dispositif de liaison par le pied de cette chambre constituée par la bride 14.

La bague intermédiaire 3 présente la particularité d'être constituée de plusieurs tronçons afin de pouvoir être mise en place sous la bride 14 une fois la pièce de liaison 5 engagée autour de la pièce 1, avec l'embase 9 sous la bride 14. Lors du serrage de l'écrou 7, la bague 3 est inserrée entre l'embase 9 de la pièce de liaison 5 et une ou plusieurs surfaces de contact formées à la partie terminale de la première pièce à assembler 1. Sur la figure 1, la surface de contact 11 est inclinée, par rapport à la verticale (ou axe XX′ de la liaison). Sur la figure 7, qui ne diffère de la figure 1 que par la nature du contact, celui-ci est constitué de deux surfaces : la première surface 12 est cylindrique, tandis que la seconde surface 13 est annulaire, et située dans un plan transversal à l'axe XX′ de la liaison. Cette variante permet de séparer la fonction d'appui pour la transmission des efforts de liaison réalisée par la seconde surface 13 et la fonction de centrage réalisée par la première surface 12. Dans tous les cas, la bague 3 est constituée en un matériau réfractaire et participe ainsi au découplage thermique de la liaison.

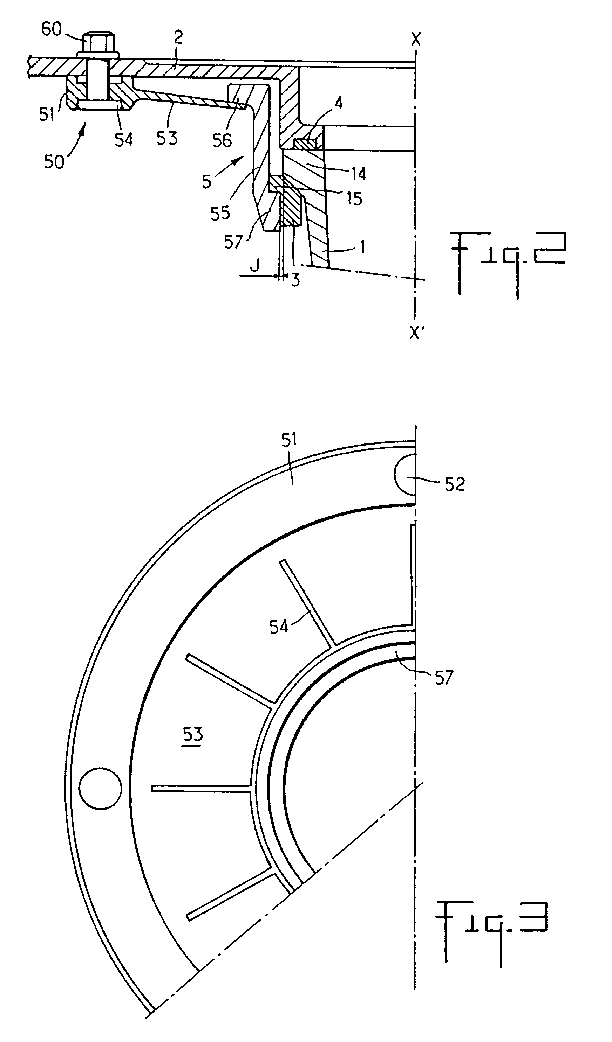

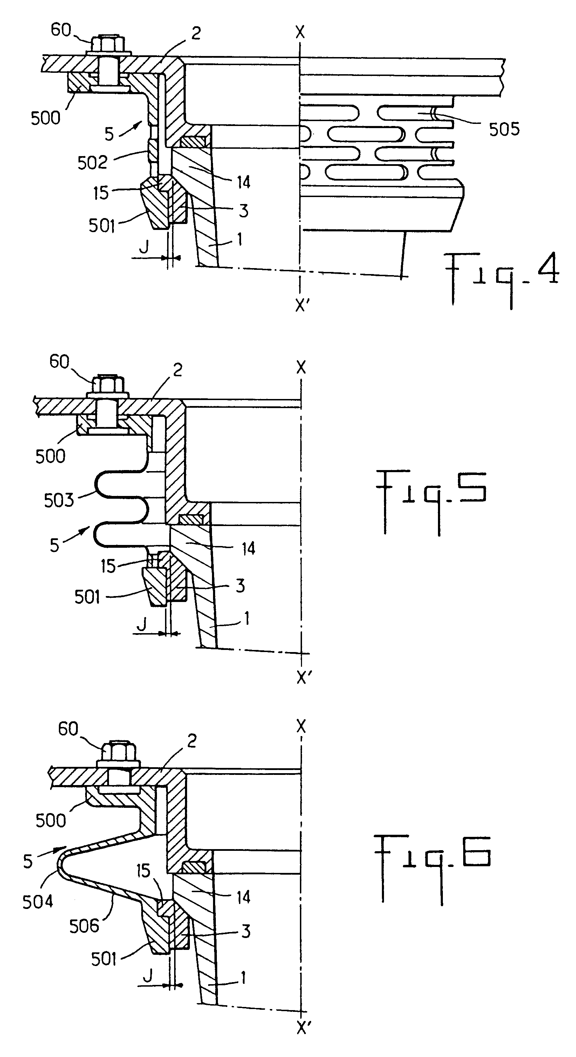

Les figures 2 et 3 montrent un second mode de réalisation d'un dispositif de liaison conforme a l'invention, dans lequel seule la pièce de liaison 5 diffère de celle du premier mode de réalisation. Elle est ici constituée de deux parties : la première partie 50 est une bride fixée de façon démontable par des boulons 60 sur la seconde pièce à assembler 2, tandis que la seconde partie 55 est une douille profilée. Plus précisément, la première partie 50 a la forme d'une pièce plate, formée d'un anneau 51 d'épaisseur renforcée muni d'ouvertures 52 pour son boulonnage sur la seconde pièce de liaison 2, prolongé par un anneau intérieur 53 pourvu de fentes radiales 54 débouchant vers l'intérieur. La seconde partie 55 de la pièce de liaison 5 vient en appui en porte-à-faux sur l'anneau intérieur 51 par une bride supérieure 56. Les efforts sont transmis par le corps cylindrique 55 de la douille, qui peut être en matériau réfractaire ou céramique, jusqu'à une bride inférieure 57 sur laquelle la bride 15 de la bague 3 vient en appui. Les autres éléments de ce second mode de réalisation étant identiques à ceux du premier mode de réalisation déjà décrit, ils ne seront pas davantage explicités. Il est à remarquer que l'élasticité dans cette seconde liaison est obtenue par la bride dans sa partie amincie 53 en forme de disque fendu radialement. La souplesse de cette pièce peut être ajustée par la surface, l'épaisseur, le nombre de fentes ainsi que par le matériau utilisé.

Les figures 4, 5 et 6 montrent trois autres formes de réalisation possibles de l'invention, pour lesquelles la pièce de liaison 5 est monobloc (mais non vissée comme dans le premier mode de réalisation des figures 1 et 7), constituée d'une bride 500 fixée par exemple par des boulons 60 sur la seconde pièce 2 à assembler, et d'une embase 501 sur laquelle s'appuie la bride 15 de la bague 3, reliées par une paroi fine 502; 503; 504 munie de fentes 505, 506 à axe transversal vis à vis de l'axe XX′ de la liaison.

Les différences des modes de réalisation des figures 4 à 6 se situent au niveau de la forme de ladite paroi fine : La forme de réalisation de la figure 4 montre une paroi fine 502 cylindrique. Sur la figure 5, la paroi fine 503 est en forme de soufflet, tandis que sur la figure 6, la paroi fine 504 est en forme de V couché.

Dans les modes de réalisation des figures 4 à 6, le diamètre interne de la pièce 5 est supérieur ou égal au diamètre extérieur de la bride 14 de la pièce 1, de manière à ménager un jeu entre la pièce de liaison 5 et la pièce 1 et permettre ainsi un passage de la pièce de liaison 5 autour de la bride 14, le blocage de la pièce 1 par rapport à la pièce de liaison 5 étant assuré par la bague intermédiaire 3.

Dans toutes les formes de réalisation qui viennent d'être décrites, la pièce de liaison 5, assure simultanément deux fonctions caractéristiques :
La première fonction est une fonction d'élasticité, obtenue par une constitution particulière de la pièce de liaison 5 qui présente une paroi fine et souple munie de fentes. La souplesse de cette paroi peut être ajustée par sa géométrie, son épaisseur, le nombre et l'orientation des fentes, ainsi que le matériau utilisé. La mise en oeuvre d'une pièce de liaison élastique permet d'absorber les dilatations thermiques et de conserver constantes les performances de liaison et d'étanchéité du dispositif de liaison.

La deuxième fonction de la pièce 5, est une fonction de découplage thermique, qui résulte de la finesse et de la section de cette paroi qui présente une résistance thermique élevée et permet un échange de calories important vers le milieu ambiant. La bague intermédiaire 3 en plusieurs tronçons, réalisée de préférence en un matériau réfractaire, participe également au découplage thermique de la liaison.

Dans le cas où la première pièce 1 est une chambre de combustion en matériau composite et la seconde pièce 2 est constituée par le support de cette chambre, le dispositif de liaison selon la présente invention évite le perçage et le soudage de la chambre de combustion, et permet l'assemblage par le pied de la chambre située en regard du support grâce à la bague 3 en plusieurs tronçons et à la pièce de liaison 5, dont le diamètre intérieur est légèrement supérieur au diamètre extérieur des pièces 1 et 2 à assembler.

Enfin, l'étanchéité de la liaison est réalisée par un joint 4 maintenu en compression directement entre les pièces 1 et 2 à assembler.

En outre, la bague intermédiaire 3 en plusieurs tronçons permet une bonne répartition des efforts sur la première pièce à assembler 1.

## Revendications

1. Dispositif de liaison démontable entre une première (1) et une seconde (2) pièces, dont l'une au moins (1) est soumise à de fortes sollicitations notamment d'origines thermique et vibratoire, comprenant un joint d'étanchéité (4) comprimé entre les deux pièces (1,2), une bride principale (14) formée sur la première pièce à assembler (1), et au moins une pièce de liaison (5) destinée à exercer une action de retenue de ladite bride principale (14) par rapport à la seconde pièce à assembler (2) et à comprimer le joint d'étanchéité (4), et
comprenant en outre une bague intermédiaire (3) elle-même munie d'une bride (15) et composée d'au moins deux tronçons, interposée entre ladite bride principale (14) et ladite pièce de liaison (5) et réalisée en matériau à faible conductibilité thermique ; la pièce de liaison (5) possèdant une paroi fine (8; 53; 502; 503; 504), qui comporte des fentes (10; 54; 505; 506) dont le nombre et l'orientation permettent de définir de façon ajustée la valeur de l'élasticité conférée à la liaison par la paroi fine (8; 53; 502; 503; 504) et la qualité de la barrière thermique définie entre lesdites première et seconde pièces (1,2), ladite paroi fine étant située entre une première partie (7; 51; 500) de fixation sur ladite seconde pièce (2) et une seconde partie cylindrique (9; 57; 501) présentant un diamètre interne supérieur au diamètre extérieur de la bride principale (14), et la bride (15) de ladite bague intermédiaire (3) prennant appui sur ladite seconde partie cylindrique (9; 57; 501) de ladite pièce de liaison (5).

2. Dispositif selon la revendication 1, caractérisé en ce que la première partie (7) de la pièce intermédiaire de liaison (5) reliée à la seconde pièce à assembler (2) est constituée par un écrou coopérant avec un filetage (6) de la seconde pièce (2).

3. Dispositif selon la revendication 1, caractérisé en ce que la pièce de liaison (5) comprend une bride (50) présentant une extrémité (51) raccordée par boulonnage sur la seconde pièce à assembler (2) et munie d'une partie mince annulaire (53) dans laquelle sont formées plusieurs fentes radiales (54), et une douille profilée (55,57) à paroi fine (55) présentant un diamètre interne supérieur au diamètre extérieur de la bride principale (14) et comportant des zones d'appui (56, 57) sur l'extrémité interne de ladite partie mince annulaire (53) et ladite bride (15) de ladite bague intermédiaire (3).

4. Dispositif selon la revendication 3, caractérisé en ce que la douille profilée (55) est en matériau réfractaire ou céramique.

5. Dispositif selon la revendication 1, caractérisé en ce que la pièce de liaison (5) est monobloc et formée d'une première bride (500) fixée par boulonnage (60) sur la seconde pièce à assembler (2), et d'une paroi fine (502; 503; 504), présentant un diamètre intérieur supérieur au diamètre extérieur de la bride principale (14) et munie de fentes (505, 506) orientées transversalement par rapport à l'axe (XX') de la liaison.

6. Dispositif selon l'une quelconque des revendications 1, 2 et 5, caractérisé en ce que ladite paroi fine (8; 504) est bombée vers l'extérieur de la liaison.

7. Dispositif selon l'une quelconque des revendications 1, 3, 4 et 5 caractérisé en ce que ladite paroi fine est cylindrique (55; 502).

8. Dispositif selon l'une quelconque des revendications 1 et 5, caractérisé en ce que ladite paroi fine est en forme de soufflet (503).

9. Dispositif selon l'une quelconque des revendications 1 à 8, caractérisé en ce que la surface de contact (11) entre la première pièce à assembler (1) et la bague intermédiaire (3) est inclinée par rapport à l'axe de liaison.

10. Dispositif selon l'une quelconque des revendications 1 à 9, caractérisé en ce que la surface de contact entre la première pièce à assembler (1) et la bague intermédiaire (3) est formée d'une surface cylindrique (12) assurant le centrage des éléments de liaison, et d'une surface annulaire (13) assurant la transmission des efforts entre les pièces à assembler.

11. Dispositif selon l'une quelconque des revendications 1 à 10, caractérisé en ce que la bague intermédiaire (3) est munie à sa partie inférieure d'ergots ou de crans permettant une immobilisation en rotation de la bague (3) par rapport à la première pièce (1) pendant les opérations d'assemblage.

12. Dispositif selon l'une quelconque des revendications 1 à 11, caractérisé en ce que la première pièce (1) est constituée par une chambre de combustion en matériau composite et en ce que la seconde pièce (2) est constituée par le support de ladite chambre, la liaison ainsi réalisée étant telle que ladite chambre de combustion composite (2) ne subit ni soudage ni perçage.

## Claims

1. Releasable connector for interconnecting a first part (1) and a second part (2), at least one of the parts being subjected to high stresses in particular of vibratory origin and of thermal origin, the connector comprising a sealing ring (4) compressed between the two parts (1, 2), a main lip (4) formed on the first part to be assembled (1), and at least one connection part (5) for exerting a retaining action on said main lip (14) relative to the second part to be assembled (2) and for compressing the sealing ring (4), and
the connector further including an intermediate ring (3) provided with a flange (15) and constituted by at least two lengths, said intermediate ring being interposed between said main lip (14) and said connection part (5) and being made of a material of low thermal conductivity; the connection part (5) having a thin wall (8; 53; 502; 503; 504) provided with slots (10; 54; 505; 506) whose number and orientation make it possible to determine in an adjusted manner the value of the elasticity imparted to the connection by the thin wall (8; 53; 502; 503; 504) and the quality of the thermal barrier defined between said first and second parts (1, 2), said thin wall being situated between a first fixing portion (7; 51; 500) for fixing on said second part (2) and a cylindrical second portion (9; 57; 501) having an inside diameter greater than the outside diameter of the main lip (14) and the flange (15) of said intermediate ring (3) bearing against said cylindrical second portion (9; 57; 501) of said connection part (5).

2. Device according to claim 1, characterized in that the first portion (7) of the intermediate connection part (5) connected to the second part to be assembled (2) is constituted by a nut co-operating with a thread (6) on the second part (2).

3. Device according to claim 1, characterized in that the connection part (5) includes a fixing ring (50) having one tip (51) bolted to the second part to be assembled (2) and provided with a thin annular portion (53) in which a plurality of radial slots (54) are formed, and a profiled sleeve (55,57) having a thin wall (5) and an inside diameter greater than the outside diameter of the man lip (14) and including bearing zones (56, 57) for bearing against the radially innermost tips of said thin annular portion (53) and for bearing against said flange (15) of said intermediate ring (3).

4. Device according to claim 3, characterized in that the profiled sleeve (55) is made of a ceramic or refractory material.

5. Device according to claim 1, characterized in that the connection part (5) is a one-piece part constituted by a first fixing ring (500) bolted (60) to the second part to be assembled (2) and by a thin wall (502; 503; 504) having an inside diameter greater than the outside diameter of the main lip (14) and provided with slots (505, 506) oriented transversely relative to the axis (XX') of the connection.

6. Device according to any one of claims 1, 2 and 5, characterized in that said thin wall (8; 504) bulges outwardly from the connection.

7. Device according to any one of claims 1,3,4 and 5, characterized in that said thin wall is cylindrical (55; 502).

8. Device according to any one of claims 1 and 5, characterized in that said thin wall is in the form of a bellows (503).

9. Device according to any one of claims 1 to 8, characterized in that the contact surface (11) between the first part to be assembled (1) and the intermediate ring (3) is inclined relative to the connection axis.

10. Device according to any one of claims 1 to 9, characterized in that the contact surface between the first part to be assembled (1) and the intermediate ring (3) is formed by a cylindrical surface (12) for centering the connection components, and by an annular surface (13) for transmitting forces between the parts to be assembled.

11. Device according to any one of claims 1 to 10, characterized in that the bottom portion of the intermediate ring (3) is provided with studs or notches for preventing the ring (3) from rotating relative to the first part (1) during assembly operations.

12. Device according to any one of claims 1 to 11, characterized in that the first part (1) is constituted by a combustion chamber made of composite material and in that the second part (2) is constituted by the support for said chamber, the connection made in this way being such that said composite combustion chamber (2) is subjected neither to welding nor to drilling.

## Patentansprüche

1. Demontierbare Verbindungsvorrichtung zwischen einem ersten (1) und einem zweiten (2) Teil, von denen wenigstens eines (1) starken Beanspruchungen, insbesondere thermischer und vibratorischer Herkunft, unterworfen ist, mit einer Dichtungsverbindung (4), die zwischen den beiden Teilen (1, 2) eingezwängt ist, einem Hauptflansch (14), der an dem ersten zusammenzusetzenden Teil (1) ausgebildet ist, und mit wenigstens einem Verbindungsteil (5), das dazu dient, eine Rückhaltewirkung des Hauptflansches (14) bezüglich des zweiten zusammenzusetzenden Teils (2) auszuüben und die Dichtungsverbindung (4) zu komprimieren, und weiterhin einen Zwischenring (3) aufweist, der selbst mit einem Flansch (15) versehen ist, und aus wenigstens zwei Teilstücken gebildet ist, die zwischen dem Hauptflansch (14) und dem Verbindungsteil (5) eingesetzt sind und aus einem Material mit geringer Wärmeleitfähigkeit gebildet sind; wobei das Verbindungsteil (5) eine dünne Zwischenwand (8; 53; 502; 503; 504) aufweist, die Kerben (10; 54; 505; 506) aufweist, deren Anzahl und Ausrichtung erlaubt auf geeignete Weise den Wert der Elastizität, die der Verbindung durch die dünne Zwischenwand (8; 53; 502; 503; 504) verliehen wird, und die Qualität der Wärmebarriere zu definieren, die zwischen dem ersten und zweiten Teil (1, 2) definiert ist, wobei die dünne Trennwand zwischen einem ersten Befestigungsbereich (7; 51; 500) an dem zweiten Teil (2) und einem zweiten zylindrischen Bereich (9; 57; 501), der einen inneren Durchmesser aufweist, der größer ist als der äußere Durchmesser des Hauptflansches (14), angeordnet ist, und der Flansch (15) des Zwischenrings (3) in Anlage kommt auf den zweiten zylindrischen Bereich (9; 57; 501) des Verbindungsteils (5).

2. Vorrichtung nach Anspruch 1, dadurch gekennzeichnet, daß der erste Bereich (7) des VerbindungszwischenstückS (5), der mit dem zweiten zusammenzusetzenden Teil (2) verbunden ist, aus einer Mutter gebildet wird, die mit einem Gewinde (6) des zweiten Teils (2) zusammenwirkt.

3. Vorrichtung nach Anspruch 1, dadurch gekennzeichnet, daß das Verbindungsteil (5) einen Flansch (50) aufweist, der ein Ende (51) aufweist, das durch Bolzen- oder Schraubenverbindung mit dem zweiten zusammenzusetzenden Teil (2) verbunden ist, und mit einem ringförmigen schlanken Bereich (53) versehen ist, in dem mehrere radiale Kerben (54) ausgebildet sind, und eine profilierte Hülse (55, 57) mit dünner Seitenwand (55) einen Innendurchmesser aufweist, der größer ist als der Außendurchmesser des Hauptflansches (14), und Anlagezonen (56, 57) an das innere Ende des ringförmigen dünnen Abschnitts (53) des Flansches (15) des Zwischenrings (3) aufweist.

4. Vorrichtung nach Anspruch 3, dadurch gekennzeichnet, daß die profilierte Hülse (55) aus einem feuerfesten oder keramischen Material ist.

5. Vorrichtung nach Anspruch 1, dadurch gekennzeichnet, daß das Verbindungsteil (5) aus einem Block ist und mit einem ersten Flansch (500) versehen ist, der durch Verbolzen oder Verschrauben (60) an dem zweiten zusammenzusetzenden Teil (2) befestigt ist, und mit einer dünnen Trennwand (502; 503; 504) versehen ist, die einen inneren Durchmesser aufweist, der größer ist als der Außendurchmesser des Hauptflansches (14) und mit Kerben (505, 506) versehen ist, die bezüglich der Achse (XX') der Verbindung quer ausgerichtet sind.

6. Vorrichtung nach einem der Ansprüche 1, 2 und 5, dadurch gekennzeichnet, daß die dünne Trennwand (8; 504) nach dem Äußeren der Verbindung gewölbt ist.

7. Vorrichtung nach einem der Ansprüche 1, 3, 4 und 5, dadurch gekennzeichnet, daß die dünne Trennwand zylindrisch (55; 502) ist.

8. Vorrichtung nach einem der Ansprüche 1 und 5, dadurch gekennzeichnet, daß die dünne Trennwand in Form eines Blasebalgs (503) ausgebildet ist.

9. Vorrichtung nach einem der Ansprüche 1 bis 8, dadurch gekennzeichnet, daß die Kontaktoberfläche (11) zwischen dem ersten zusammenzusetzenden Teil (1) und dem Zwischenring (3) bezüglich der Verbindungsachse geneigt ist.

10. Vorrichtung nach einem der Ansprüche 1 bis 9, dadurch gekennzeichnet, daß die Kontaktoberfläche zwischen dem ersten zusammenzusetzenden Teil (1) und dem Zwischenring (3) aus einer zylindrischen Oberfläche (12) gebildet ist, die die Zentrierung der Verbindungselemente sicherstellt, und mit einer ringförmigen Oberfläche (13) ausgebildet ist, die die Übertragung der Kräfte zwischen den zusammenzusetzenden Teilen sicherstellt.

11. Vorrichtung nach einem der Ansprüche 1 bis 10, dadurch gekennzeichnet, daß der Zwischenring (3) an seinem unteren Bereich mit Haken oder Nasen versehen ist, die eine Drehung des Ringes (3) bezüglich des ersten Teils (1) während der Zusammensetzungs-Vorgänge verhindern.

12. Vorrichtung nach einem der Ansprüche 1 bis 11, dadurch gekennzeichnet, daß das erste Teil (1) gebildet wird aus einer Brennkammer aus Verbundmaterial, und daß das zweite Teil (2) gebildet wird durch das Lager der Kammer, wobei diese so erzeugte Verbindung derart ist, daß die Verbundstoffbrennkammer (2) weder einem Schweißen noch einem Bohren unterliegt.
